# FASCICULE DE BREVET EUROPEEN

(11) **EP 4 295 084 B1**
(45) Date de publication et mention de la délivrance du brevet: **06.11.2024**
(21) Numéro de dépôt: 22708990.1
(22) Date de dépôt: 14.02.2022
(51) Int. Cl.: F23R 3/50, F23R 3/60, F01D 25/28, F16B 21/02

(54) **SOUS ENSEMBLE COMPORTANT DES MOYENS DE COMPENSATION D'UNE DIFFÉRENCE DE DILATATION**
BAUGRUPPE MIT MITTELN ZUR KOMPENSATION EINER AUSDEHNUNGSDIFFERENZ
SUBASSEMBLY COMPRISING MEANS FOR COMPENSATING FOR A DIFFERENCE IN EXPANSION

(30) Priorité: 18.02.2021 FR 2101556
(43) Date de publication de la demande: 27.12.2023
(73) Titulaire: Safran Ceramics, 33185 Le Haillan (FR)
(72) Inventeur: DUCHAINE, Patrick, Olivier, 77550 MOISSY-CRAMAYEL (FR); PAILLARD, Amaury, Benoit, Jacques, 77550 MOISSY-CRAMAYEL (FR); CONETE, Eric, 77550 MOISSY-CRAMAYEL (FR); LACOMBE, Benjamin, 77550 MOISSY-CRAMAYEL (FR)
(74) Mandataire: Brevalex
(86) Numéro de dépôt international: PCT/FR2022/050263
(87) Numéro de publication internationale: WO 2022/175621

(56) Documents cités:
- US-A- 3 742 704
- US-A1- 2007 031 188
- US-A1- 2014 109 595
- US-A1- 2016 298 853
- US-B2- 9 488 110

## Description

### DOMAINE TECHNIQUE

L'invention concerne un sous ensemble de turbomachine, notamment d'un turbopropulseur comportant deux éléments réalisés en matériaux différents, et qui est apte à conserver une liaison étanche malgré les différences de dilatation des deux éléments.

L'invention concerne plus particulièrement un sous ensemble comportant un élément formant une partie de paroi de la chambre de combustion et une pièce de liaison.

### ÉTAT DE LA TECHNIQUE ANTÉRIEURE

La chambre de combustion d'une turbomachine, notamment d'un turbomoteur, délimite un espace dans lequel de l'air et le carburant se mélangent et se consument pour générer de l'énergie apte à entraîner le turbomoteur. La température dans la chambre de combustion peut atteindre environ 2500K (kelvin).

Pour que les parois de la chambre de combustion puissent résister à de telles températures, un flux de circulation d'air de refroidissement traverse ces parois et le matériau des parois a été adapté pour qu'au moins une partie de celles-ci soient réalisées en matériau connu sous la dénomination CMC (pour Composite à Matrice Céramique). D'autres composants de la chambre de combustion, notamment des éléments de liaison des parois de la chambre de combustion avec un élément structurel du turbomoteur, sont réalisés en acier.

Une chambre de combustion peut comporter deux composants réalisés en matériaux différents, c'est-à-dire en acier et en CMC, qui sont reliés ensemble de manière étanche. Cette étanchéité est par exemple réalisée par un appui axial de deux parois radiales annulaires en vis-à-vis, appartenant chacune à l'un des deux composants.

Les coefficients de dilatation de l'acier et du CMC sont différents. Cela pose un problème de déplacement relatif des deux éléments et ainsi rompre l'étanchéité de la liaison entre ces deux éléments.

Une solution pour compenser ce déplacement relatif consiste à introduire des brides souples pour relier la paroi de chambre de combustion en CMC à l'élément structurel et des joints à lèvre entre les parties mobiles l'une par rapport à l'autre.

Une autre solution est connue du document US 9,488,110 B2.

L'invention a pour but de proposer une solution alternative de liaison étanche entre deux éléments réalisés en acier et en CMC.

### EXPOSÉ DE L'INVENTION

L'invention propose un sous ensemble de turbomachine comportant un premier composant formant une portion de paroi de chambre de combustion de la turbomachine et un deuxième composant formant organe de liaison du premier composant à un élément structurel de la chambre de combustion, dans lequel les deux composants sont réalisés en matériaux possédant des coefficients de dilatation différents, et dans lequel les deux composants sont des éléments de révolution coaxiaux à un axe principal A du sous ensemble, et comportent chacun une paroi radiale annulaire, les parois radiales étant en vis-à-vis l'une de l'autre en appui axialement dans un premier sens, caractérisé en ce que le deuxième composant comporte une pluralité de pattes de serrage, dont les pattes de serrage coopèrent avec le premier composant pour produire un effort axial d'appui des parois radiales l'une contre l'autre.

La coopération des pattes de serrage avec le premier composant permet de conserver l'appui axial des parois radiales l'une contre l'autre quelle que soit l'amplitude de la dilatation de chacun des composants.

De préférence, le premier composant comporte une nervure radiale contre laquelle les pattes de serrage sont en appui axialement dans un sens opposé audit premier sens.

De préférence, les pattes de serrage sont déformées élastiquement selon la direction axiale par coopération avec la nervure radiale.

De préférence, chacun du premier composant et du deuxième composant comporte un corps cylindrique, dont les corps cylindriques sont coaxiaux et de diamètres différents et dans lequel la paroi radiale de chaque composant s'étend radialement à partir du corps cylindrique qui lui est associé en direction du corps cylindrique de l'autre composant, et la nervure radiale s'étend radialement à partir du corps cylindrique du premier composant en direction du deuxième composant et est décalée axialement par rapport à la paroi radiale du premier composant.

De préférence, le premier composant et le deuxième composant sont assemblés l'un avec l'autre selon un déplacement de translation axiale du deuxième composant par rapport au premier composant dans le sens d'appui de la paroi radiale du deuxième composant contre la paroi radiale du premier composant puis selon un déplacement de rotation du deuxième composant par rapport au premier composant autour de l'axe principal A.

De préférence, la nervure radiale comporte des creux et des pleins répartis circonférentiellement de manière alternative, dont chaque patte de serrage est en appui axialement contre un plein de la nervure radiale.

De préférence, l'étendue circonférentielle de chaque creux de la nervure radiale est au moins égale à l'étendue circonférentielle de la patte de serrage qui lui est associée.

De préférence, l'étendue circonférentielle de chaque plein de la nervure radiale est au moins égale à l'étendue circonférentielle de la patte de serrage qui lui est associée.

De préférence, chaque patte de serrage s'étend radialement en direction du corps cylindrique du premier composant à partir d'un bord radial d'extrémité de la paroi radiale du deuxième composant.

L'invention concerne aussi une turbomachine d'aéronef comportant une chambre de combustion dont une paroi de la chambre de combustion est fixée par un sous ensemble selon l'invention.

### BRÈVE DESCRIPTION DES DESSINS

[Fig. 1] est une représentation schématique en perspective des deux composants formant le sous ensemble selon l'invention.
[Fig. 2] est une section selon un plan axial du sous ensemble assemblé.

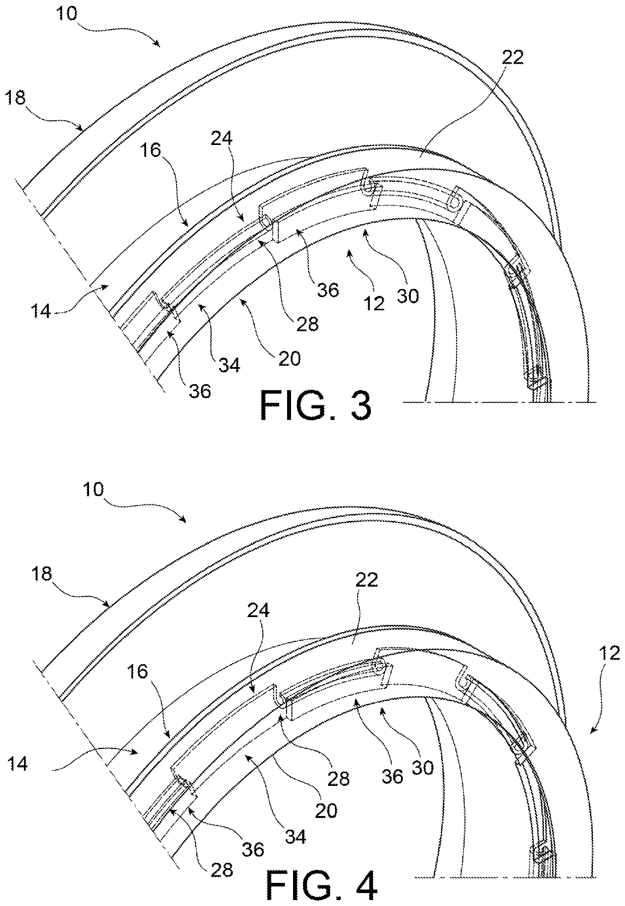

[Fig. 3] est une représentation schématique en perspective du sous ensemble dans lequel les composants sont dans une position intermédiaire d'assemblage.
[Fig. 4] est une vue similaire à celle de la figure 3, montrant les deux composants en position assemblée, après rotation du deuxième composant par rapport au premier composant.

### EXPOSÉ DÉTAILLÉ DES MODES DE REALISATIONS

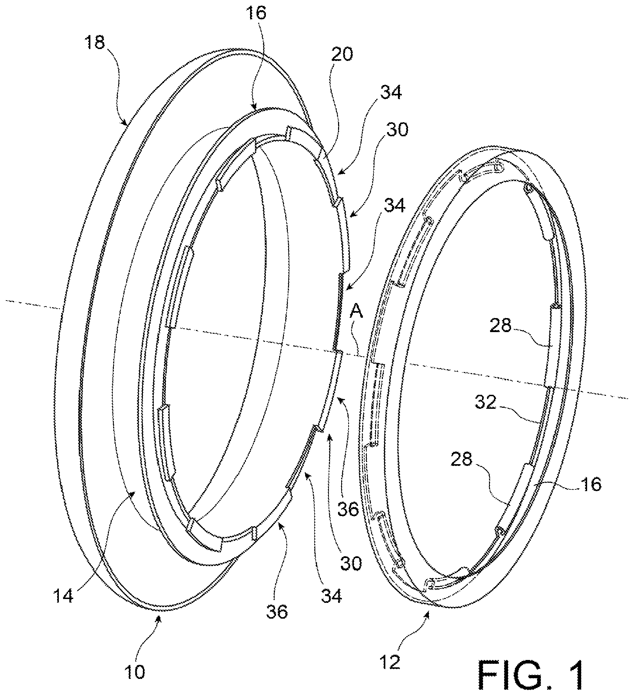

On a représenté à la figure 1 deux composants 10, 12 formant un sous ensemble d'une chambre de combustion d'une turbomachine, et de préférence d'un turbomoteur.

Dans la description qui va suivre, on adoptera à titre arbitraire et non limitatif la direction d'amont en aval comme étant la direction axiale de gauche à droite selon les figures.

Un premier composant 10 forme une partie de la paroi de la chambre de combustion.

Ce premier composant 10 est un élément de révolution centré sur un axe principal A de la chambre de combustion. Il est réalisé en un matériau résistant aux hautes températures pouvant régner dans la chambre de combustion.

De préférence, le premier composant 10 est réalisé en matériau composite à matrice céramique (ou CMC).

Le premier composant comporte un corps cylindrique 14 coaxial à l'axe principal A et une paroi radiale 16 portée par le corps et qui s'étend radialement vers l'extérieur, par rapport à l'axe principal A, à partir d'une surface radialement externe du corps cylindrique 14.

De préférence, la paroi radiale 16 est située au niveau d'une première extrémité axiale 20 du corps cylindrique 14, ici l'extrémité axiale aval du corps cylindrique 14. La paroi radiale 16 est en outre située axialement à distance vers l'amont du bord aval libre de cette extrémité aval 20 du corps cylindrique 14.

Ici, le premier composant 10 est adapté à une chambre de combustion dite "à retour", c'est-à-dire pour un turbomoteur dans lequel le conduit d'écoulement du flux de gaz chaud forme un coude pour rediriger l'écoulement du flux de gaz, à la différence d'une chambre de combustion dite "droite" dans laquelle le conduit d'écoulement du flux de gaz est sensiblement rectiligne et parallèle à l'axe principal du turbomoteur.

Le premier composant 10 comporte à cet effet une portion 18 présentant une section courbée en C associée au coude du conduit d'écoulement, qui est portée par l'extrémité amont du corps cylindrique 14

Il sera compris que l'invention n'est pas limitée à cette forme du premier composant 10, qui peut ne pas comporter cette portion 18 courbée en C, et /ou comporter une autre portion complémentaire permettant de délimiter la chambre de combustion.

Le deuxième composant 12 est lui aussi un élément de révolution coaxial à l'axe principal A.

Le deuxième composant n'est pas soumis aux mêmes contraintes de températures que le premier composant, il est réalisé en un alliage à base de nickel ou de Cobalt, par exemple du NCK20D, du NC22FeD ou du KCN22W.

Le deuxième composant 12 comporte un corps 22 qui est de diamètre supérieur au diamètre du corps cylindrique 14 du premier composant 10 et qui s'étend par conséquent en partie autour et à distance de l'extrémité aval 20 du corps cylindrique 14 du premier composant.

Le deuxième composant 12 comporte aussi une paroi radiale 24 qui s'étend radialement vers l'intérieur, selon l'axe principal A, en direction du corps cylindrique 14 du premier composant 10.

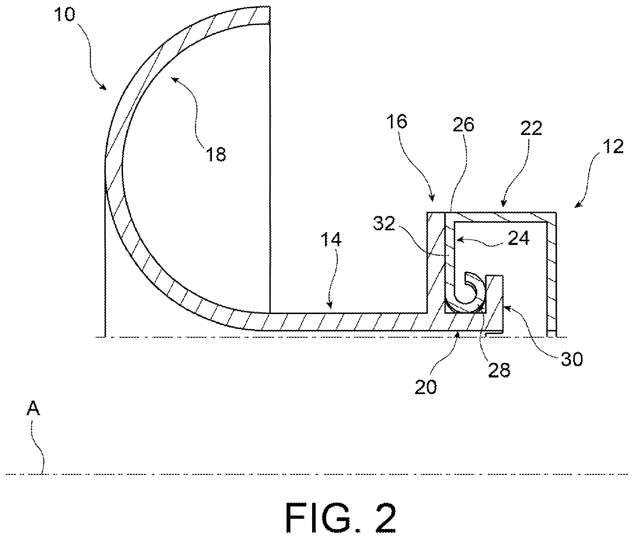

De préférence, et comme on peut le voir plus en détails à la figure 2, cette paroi radiale 24 est reliée au bord d'extrémité amont 26 du corps 22, qui est situé axialement au niveau de l'extrémité aval 20 du corps cylindrique 14 du premier composant 10.

Les deux parois radiales 16, 24 des deux composants 10, 12 sont parallèles et en appui axialement l'une contre l'autre.

Les deux parois radiales 16, 24 étant toutes les deux annulaires, cet appui axial des parois radiales 16, 24 l'une contre l'autre permet d'assurer une étanchéité aux gaz de la liaison entre les deux composants 10, 12.

Ici, la paroi radiale 24 du deuxième composant 12 appuie axialement vers l'amont contre la paroi radiale 16 du premier composant 10.

Le premier composant 10 et le deuxième composant 12 sont réalisés en deux matériaux différents possédant des coefficients de dilatation différents.

En l'espèce, le premier composant 10 se dilate entre deux à six fois moins que le deuxième composant 12.

Pour maintenir les parois radiales 16, 24 en appui l'une contre l'autre, le deuxième composant comporte une pluralité de pattes radiales 28 de serrage qui sont en appui axialement vers l'aval contre une nervure radiale 30 portée par le corps 14 du premier composant 10, c'est-à-dire dans le sens opposé au sens d'appui de la paroi radiale 24 du deuxième composant 12 contre la paroi radiale 16 du premier composant 10.

La nervure radiale 30 est décalée axialement vers l'aval par rapport à la paroi radiale 16 du premier composant 10.

Ainsi, les pattes radiales 28 sont situées axialement entre la paroi radiale 16 et la nervure radiale 30.

Par ailleurs, lorsque les deux composants 10, 12 sont assemblés l'un avec l'autre, les pattes radiales 28 subissent une déformation élastiquement, par compression axiale contre la nervure radiale 30. En contrepartie de cette déformation élastique des pattes radiales 28 la paroi radiale 24 du deuxième composant 12 est en appui contre la paroi radiale 16 du deuxième composant 12.

Selon un mode de réalisation préféré, les pattes radiales 28 sont portées par la paroi radiale 24 du deuxième composant 12. Les pattes radiales 28 s'étendent radialement vers l'intérieur en prolongement du bord radialement interne 32 de la paroi radiale 24 du deuxième composant 12.

L'extrémité radiale intérieure libre de chaque patte radiale 28 vient en appui axial contre la nervure radiale 30. Cette extrémité libre de chaque patte radiale 28 est recourbée vers l'aval pour venir en contact avec la nervure radiale 30.

Selon le mode de réalisation représenté aux figures, l'extrémité libre de chaque patte radiale 28 est recourbée pour avoir une forme cylindrique.

Il sera compris que l'invention n'est pas limitée à ce mode de réalisation et que l'extrémité libre de chaque patte radiale peut être différente sans sortir du domaine de l'invention.

L'assemblage des deux composants 10, 12 l'un avec l'autre s'effectue selon un déplacement axial des composants 10, 12 l'un par rapport à l'autre jusqu'à ce que leurs parois radiales 16, 24 soient en contact l'une avec l'autre. En l'espèce ici, le deuxième composant 12 est déplacé axialement vers l'amont par rapport au premier composant 10 Comme on l'a dit précédemment, les pattes radiales 28 sont destinées à être en appui axialement vers l'aval contre la nervure radiale 30.

Pour que les pattes radiales 28 ne butent pas axialement vers l'amont contre la nervure radiale 30, la nervure radiale 30 est crénelée et comporte une succession alternative de creux 34 et de pleins 36.

Les creux 34 ont une hauteur radiale inférieure à la distance entre l'extrémité radiale libre des pattes radiales 28 et la paroi externe du corps cylindrique 14 du premier composant 10. Aussi, l'étendue circonférentielle des creux 34 est au moins égale à l'étendue circonférentielle des pattes radiales 28.

Les pleins 36 ont une hauteur radiale supérieure à la distance entre l'extrémité radiale libre des pattes radiales 28 et la paroi externe du corps cylindrique 14 du premier composant 10.

De préférence, l'étendue circonférentielle des pleins 36 est elle aussi sensiblement égale à l'étendue circonférentielle des pattes radiales 28.

Ainsi, selon un mode de réalisation préféré, les pleins 36 et les creux 34 ont une même étendue circonférentielle sensiblement égale à l'étendue circonférentielle des pattes radiales 28.

Selon un autre mode de réalisation, l'étendue circonférentielle des creux 34 est sensiblement égale à l'étendue circonférentielle des pattes radiales 28 et l'étendue circonférentielle des pleins 36 est supérieure à l'étendue circonférentielle des pattes radiales 28.

La présence de ces creux 34 et de ces pleins 36 permet aux pattes radiales 28 de passer axialement au travers de la nervure radiale 30 lors du déplacement axial vers l'amont du deuxième composant 12 par rapport au premier composant 10.

Ainsi, l'assemblage des deux composants 10, 12 l'un avec l'autre est du type à baïonnette, c'est-à-dire comportant une translation axiale suivie d'une rotation des composants 10, 12 l'un par rapport à l'autre.

Pour pouvoir effectuer le déplacement axial du deuxième composant 12, les composants 10, 12 sont positionnés angulairement autour de l'axe principal A en mettant les pattes radiales 28 en face des creux de la nervure radiale 30.

A la fin du déplacement axial vers l'amont du deuxième composant 12 par rapport au premier composant 10, les parois radiales 16, 24 des deux composants 10, 12 sont en appui axial l'une contre l'autre.

Ensuite, le deuxième composant 12 est mis en rotation autour de l'axe principal A par rapport au premier composant 10 pour mettre les pattes radiales 28 en face des pleins 36 de la nervure radiale 30.

Comme on l'a dit précédemment, lorsque les deux composants 10, 12 sont assemblés l'un avec l'autre, les pattes radiales 28 sont déformées élastiquement.

Ainsi, avant la rotation du deuxième composant 12 par rapport au premier composant 10, les extrémités libres des pattes radiales 28 sont décalées axialement vers l'aval par rapport à la nervure radiale.

Lors de la rotation du deuxième composant 12, les pattes radiales 28 sont déformées élastiquement vers l'amont.

Pour cela, les bords d'extrémité circonférentielle de chaque patte radiale 28 sont chanfreinés, présentant ainsi une face inclinée qui coopère avec un bord d'un plein 36 en vis-à-vis de la nervure radiale pour provoquer la déformation élastique de la patte radiale 28.

## Revendications

1. Sous ensemble de turbomachine comportant un premier composant (10) formant une portion de paroi de chambre de combustion de la turbomachine et un deuxième composant (12) formant organe de liaison du premier composant (10) à un élément structurel de la chambre de combustion,
dans lequel les deux composants (10, 12) sont réalisés en matériaux possédant des coefficients de dilatation différents,
et dans lequel les deux composants (10, 12) sont des éléments de révolution coaxiaux à un axe principal A du sous ensemble, et comportent chacun une paroi radiale (16, 24) annulaire, les parois radiales (16, 24) étant en vis-à-vis l'une de l'autre en appui axialement dans un premier sens,
où le deuxième composant (12) comporte une pluralité de pattes de serrage (28), dont les pattes de serrage (28) coopèrent avec le premier composant (10) pour produire un effort axial d'appui des parois radiales (16, 24) l'une contre l'autre.

2. Sous ensemble selon la revendication précédente, **caractérisé en ce que** le premier composant (10) comporte une nervure radiale (30) contre laquelle les pattes de serrage (28) sont en appui axialement dans un sens opposé audit premier sens.

3. Sous ensemble selon la revendication précédente, **caractérisé en ce que** les pattes de serrage (28) sont déformées élastiquement selon la direction axiale par coopération avec la nervure radiale (30).

4. Sous ensemble selon la revendication 2 ou 3, dans lequel chacun du premier composant (10) et du deuxième composant (12) comporte un corps cylindrique (14, 22), dont les corps cylindriques (14, 22) sont coaxiaux et de diamètres différents et dans lequel la paroi radiale (16, 24) de chaque composant (10, 12) s'étend radialement à partir du corps cylindrique (14, 22) qui lui est associé en direction du corps cylindrique (14, 22) de l'autre composant (10, 12),
**caractérisé en ce que** la nervure radiale (30) s'étend radialement à partir du corps cylindrique (14) du premier composant (10) en direction du deuxième composant (12) et est décalée axialement par rapport à la paroi radiale (16, 24) du premier composant (10).

5. Sous ensemble selon la revendication précédente, **caractérisé en ce que** le premier composant (10) et le deuxième composant (12) sont assemblés l'un avec l'autre selon un déplacement de translation axiale du deuxième composant (12) par rapport au premier composant (10) dans le sens d'appui de la paroi radiale (16) du deuxième composant (12) contre la paroi radiale (24) du premier composant (10) puis selon un déplacement de rotation du deuxième composant (12) par rapport au premier composant (10) autour de l'axe principal A.

6. Sous ensemble selon la revendication précédente, **caractérisé en ce que** la nervure radiale (30) comporte des creux (34) et des pleins (36) répartis circonférentiellement de manière alternative, dont chaque patte de serrage (28) est en appui axialement contre un plein (36) de la nervure radiale (30).

7. Sous ensemble selon la revendication précédente, **caractérisé en ce que** l'étendue circonférentielle de chaque creux (34) de la nervure radiale (30) est au moins égale à l'étendue circonférentielle de la patte de serrage (28) qui lui est associée.

8. Sous ensemble selon la revendication 6 ou 7, **caractérisé en ce que** l'étendue circonférentielle de chaque plein (36) de la nervure radiale (30) est au moins égale à l'étendue circonférentielle de la patte de serrage (28) qui lui est associée.

9. Sous ensemble selon l'une quelconque des revendications 4 à 8, **caractérisé en ce que** chaque patte de serrage (28) s'étend radialement en direction du corps cylindrique (14) du premier composant (10) à partir d'un bord radial d'extrémité (32) de la paroi radiale (24) du deuxième composant (12).

10. Turbomachine d'aéronef comportant une chambre de combustion dont une paroi de la chambre de combustion est fixée par un sous ensemble selon l'une quelconque des revendications précédentes.

## Patentansprüche

1. Unterbaugruppe für ein Turbotriebwerk, die eine erste Komponente (10), die einen Brennkammer-Wandabschnitt des Turbotriebwerks bildet, und eine zweite Komponente (12) umfasst, die ein Verbindungsorgan der ersten Komponente (10) zu einem Strukturelement der Brennkammer bildet,
wobei die zwei Komponenten (10, 12) aus Materialien hergestellt sind, die unterschiedliche Ausdehnungskoeffizienten besitzen,
und wobei die zwei Komponenten (10, 12) mit einer Hauptachse A der Unterbaugruppe koaxiale Drehelemente sind und jeweils eine ringförmige radiale Wand (16, 24) umfassen, wobei die radialen Wände (16, 24) axial in einer ersten Richtung einander gegenüberliegend aufliegen,
wobei die zweite Komponente (12) eine Vielzahl von Klemmlaschen (28) umfasst, wobei die Klemmlaschen (28) mit der ersten Komponente (10) zusammenwirken, um eine axiale Auflagekraft der radialen Wände (16, 24) aneinander zu erzeugen.

2. Unterbaugruppe nach dem vorstehenden Anspruch, **dadurch gekennzeichnet, dass** die erste Komponente (10) eine radiale Rippe (30) umfasst, an der die Klemmlaschen (28) axial in einer der ersten Richtung entgegengesetzten Richtung aufliegen.

3. Unterbaugruppe nach dem vorstehenden Anspruch, **dadurch gekennzeichnet, dass** die Klemmlaschen (28) durch Zusammenwirken mit der radialen Rippe (30) elastisch in der axialen Richtung verformt werden.

4. Unterbaugruppe nach Anspruch 2 oder 3, wobei jede der ersten Komponente (10) und der zweiten Komponente (12) einen zylindrischen Körper (14, 22) umfasst, wobei die zylindrischen Körper (14, 22) koaxial und von unterschiedlichen Durchmessern sind und wobei sich die radiale Wand (16, 24) jeder Komponente (10, 12) radial von dem zylindrischen Körper (14, 22), der ihr zugeordnet ist, aus in Richtung des zylindrischen Körpers (14, 22) der anderen Komponente (10, 12) erstreckt,
**dadurch gekennzeichnet, dass** sich die radiale Rippe (30) radial von dem zylindrischen Körper (14) der ersten Komponente (10) aus in Richtung der zweiten Komponente (12) erstreckt und axial in Bezug auf die radiale Wand (16, 24) der ersten Komponente (10) versetzt ist.

5. Unterbaugruppe nach dem vorstehenden Anspruch, **dadurch gekennzeichnet, dass** die erste Komponente (10) und die zweite Komponente (12) in einer axialen Verschiebebewegung der zweiten Komponente (12) in Bezug auf die erste Komponente (10) in der Auflagerichtung der radialen Wand (16) der zweiten Komponente (12) an der radialen Wand (24) der ersten Komponente (10) und anschließend in einer Drehbewegung der zweiten Komponente (12) in Bezug auf die erste Komponente (10) um die Hauptachse A herum miteinander verbunden werden.

6. Unterbaugruppe nach dem vorstehenden Anspruch, **dadurch gekennzeichnet, dass** die radiale Rippe (30) Hohlstücke (34) und Vollstücke (36) umfasst, die in Umfangsrichtung abwechselnd verteilt sind, wobei jede Klemmlasche (28) axial an einem Vollstück (36) der radialen Rippe (30) aufliegt.

7. Unterbaugruppe nach dem vorstehenden Anspruch, **dadurch gekennzeichnet, dass** die Umfangserstreckung jedes Hohlstücks (34) der radialen Rippe (30) mindestens gleich der Umfangserstreckung der ihr zugeordneten Klemmlasche (28) ist.

8. Unterbaugruppe nach Anspruch 6 oder 7, **dadurch gekennzeichnet, dass** die Umfangserstreckung jedes Vollstücks (36) der radialen Rippe (30) mindestens gleich der Umfangserstreckung der ihr zugeordneten Klemmlasche (28) ist.

9. Unterbaugruppe nach einem der Ansprüche 4 bis 8, **dadurch gekennzeichnet, dass** sich jede Klemmlasche (28) von einer radialen Endkante (32) der radialen Wand (24) der zweiten Komponente (12) ausradial in Richtung des zylindrischen Körpers (14) der ersten Komponente (10) erstreckt.

10. Flugzeug-Turbotriebwerk, das eine Brennkammer umfasst, wobei eine Wand der Brennkammer durch eine Unterbaugruppe nach einem der vorstehenden Ansprüche befestigt ist.

## Claims

1. A turbomachine subassembly including a first component (10) forming a combustion chamber wall portion of the turbomachine and a second component (12) forming a member for connecting the first component (10) to a structural element of the combustion chamber,
wherein the two components (10, 12) are made of materials having different coefficients of expansion,
and wherein the two components (10, 12) are axisymmetric elements coaxial with a main axis A of the subassembly, and each includes an annular radial wall (16, 24), the radial walls (16, 24) facing each other while bearing axially in a first direction,
wherein the second component (12) includes a plurality of clamping tabs (28), which clamping tabs (28) cooperate with the first component (10) to impart an axial force pressing the radial walls (16, 24) against one another.

2. The subassembly according to the preceding claim, **characterised in that** the first component (10) includes a radial rib (30) against which the clamping tabs (28) bear axially in a direction opposite to said first direction.

3. The subassembly according to the preceding claim, **characterised in that** the clamping tabs (28) are elastically deformed according to the axial direction by cooperation with the radial rib (30).

4. The subassembly according to claim 2 or 3, wherein each of the first component (10) and the second component (12) includes a cylindrical body (14, 22), the cylindrical bodies (14, 22) of which are coaxial and have different diameters and wherein the radial wall (16, 24) of each component (10, 12) extends radially from the cylindrical body (14, 22) associated therewith in the direction of the cylindrical body (14, 22) of the other component (10, 12),
**characterised in that** the radial rib (30) extends radially from the cylindrical body (14) of the first component (10) in the direction of the second component (12) and is axially offset with respect to the radial wall (16, 24) of the first component (10).

5. The subassembly according to the preceding claim, **characterised in that** the first component (10) and the second component (12) are assembled together according to an axial translational movement of the second component (12) relative to the first component (10) in the direction in which the radial wall (16) of the second component (12) bears against the radial wall (24) of the first component (10) then according to a rotational movement of the second component (12) relative to the first component (10) about the main axis A.

6. The subassembly according to the preceding claim, **characterised in that** the radial rib (30) includes recesses (34) and solid portions (36) distributed circumferentially in an alternating manner, each clamping tab (28) of which bears axially against a solid portion (36) of the radial rib (30).

7. The subassembly according to the preceding claim, **characterised in that** the circumferential extent of each recess (34) of the radial rib (30) is at least equal to the circumferential extent of the clamping tab (28) associated therewith.

8. The subassembly according to claim 6 or 7, **characterised in that** the circumferential extent of each solid portion (36) of the radial rib (30) is at least equal to the circumferential extent of the clamping tab (28) associated therewith.

9. The subassembly according to any one of claims 4 to 8, **characterised in that** each clamping tab (28) extends radially in the direction of the cylindrical body (14) of the first component (10) from an end radial edge (32) of the radial wall (24) of the second component (12).

10. An aircraft turbomachine including a combustion chamber, one wall of the combustion chamber of which is fastened by a subassembly according to any one of the preceding claims.
